(19) **Europäisches Patentamt**
**European Patent Office**
**Office européen des brevets**

(11) **EP 4 683 013 A1**

(12) **EUROPEAN PATENT APPLICATION**
published in accordance with Art. 153(4) EPC

(43) Date of publication:
**21.01.2026 Bulletin 2026/04**

(21) Application number: **23839835.8**

(22) Date of filing: **23.06.2023**

(51) International Patent Classification (IPC):
$H01M\ 8/1067^{(2016.01)}$    $H01M\ 8/1018^{(2016.01)}$
$H01M\ 8/1058^{(2016.01)}$    $H01M\ 8/1039^{(2016.01)}$
$H01M\ 8/1004^{(2016.01)}$    $H01M\ 8/10^{(2016.01)}$

(52) Cooperative Patent Classification (CPC):
**H01M 8/10; H01M 8/1004; H01M 8/1018;**
**H01M 8/1039; H01M 8/1058; H01M 8/1067;**
**Y02E 60/50**

(86) International application number:
**PCT/KR2023/008763**

(87) International publication number:
**WO 2024/014741 (18.01.2024 Gazette 2024/03)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **12.07.2022 KR 20220085688**

(71) Applicant: **Kolon Industries, Inc.**
**Seoul 07793 (KR)**

(72) Inventors:
• **LEE, Eun Su**
**Seoul 07793 (KR)**

• **LEE, Dong Hoon**
**Seoul 07793 (KR)**
• **PARK, Jung Hwa**
**Seoul 07793 (KR)**
• **LEE, Hye Song**
**Seoul 07793 (KR)**

(74) Representative: **Vossius & Partner**
**Patentanwälte Rechtsanwälte mbB**
**Siebertstrasse 3**
**81675 München (DE)**

(54) **POLYMER ELECTROLYTE MEMBRANE AND MEMBRANE-ELECTRODE ASSEMBLY COMPRISING SAME**

(57)    The present invention relates to a polymer electrolyte membrane comprising an ion conductor having ionic conductivity, wherein the polymer electrolyte membrane has an initial storage modulus in machine direction (MD) of 500 MPa or greater and an initial storage modulus in transverse direction (TD) / an initial storage modulus in machine direction (MD) of 0.5-1.0.

EP 4 683 013 A1

**Description**

**Technical Field**

The present disclosure relates generally to a polymer electrolyte membrane including an ion conductor having ion conductivity. More particularly, the present disclosure relates to a polymer electrolyte membrane and a membrane-electrode assembly including the same, in which the ratio of the storage elastic modulus of the polymer electrolyte membrane at a temperature when a fuel cell is in operation to the storage elastic modulus of the polymer electrolyte membrane at a temperature when a fuel cell is not in operation (at rest) satisfies a predetermined range. Thus, the polymer electrolyte membrane has the advantage of maintaining excellent electrode adhesion with little changes in dimensional stability, leading to excellent long-term fuel cell performance.

**Background Art**

Fuel cells are cells that directly convert chemical energy generated by oxidation of fuel into electrical energy. Fuel cells are widely considered a next-generation energy source due to their environmentally friendly features such as high energy efficiency and low pollutant emissions.

Generally, a fuel cell has a structure in which an electrolyte membrane is interposed between an oxidation electrode (anode) and a reduction electrode (cathode). This structure is referred to as a membrane-electrode assembly (MEA).

Fuel cells can be classified into alkaline electrolyte fuel cells and polymer electrolyte membrane fuel cells (PEMFC) depending on the type of electrolyte membrane. Of these, polymer electrolyte membrane fuel cells are gaining much attention as power supply devices for portable, automotive, and household applications due to their advantages such as low operating temperature of less than 100°C, fast starting and responding characteristics, and excellent durability.

A representative example of such polymer electrolyte membrane fuel cells is a proton exchange membrane fuel cell (PEMFC), which uses hydrogen gas as fuel.

In briefly describing the reaction that occurs in a polymer electrolyte membrane fuel cell, first, when fuel such as hydrogen gas is supplied to an anode, hydrogen at the anode is oxidized to produce protons ($H^+$) and electrons ($e^-$). The protons ($H^+$) thus produced are transferred to a cathode through a polymer electrolyte membrane, whereas the electrons ($e^-$) thus produced are transferred to the cathode through an external circuit. Oxygen is supplied to the cathode, and oxygen is reduced by combining with protons ($H^+$) and electrons ($e^-$) to produce water.

Since the polymer electrolyte membrane is a channel through which protons ($H^+$) produced at the anode are delivered to the cathode, the polymer electrolyte membrane is essentially required to have excellent conductivity for protons ($H^+$). Furthermore, the polymer electrolyte membrane is required to have excellent separation capability of separating hydrogen gas that is supplied to the anode and oxygen that is supplied to the cathode, and other characteristics such excellent mechanical strength, excellent dimensional stability, excellent chemical resistance, and a small ohmic loss at a high current density are also required.

The polymer electrolyte membrane has ion channels therein that allow the passage of protons produced at the anode to the cathode. Functional groups such as sulfonic acid groups and carboxyl groups that transfer protons form ion clusters located inside the channels, and due to the presence of these clusters, the polymer electrolyte membrane has ion transfer properties that help the transfer of protons across the membrane.

In a fuel cell, the anode and the cathode participate in distinct reactions and they are fed with different reactants and produce different by-products, one side and the other side of the polymer electrolyte membrane are exposed to different environments during operation of the fuel cell. Additionally, a typical fuel cell has a structure in which electrode layers are transferred to opposite sides of a polymer electrolyte membrane to form a membrane-electrode assembly with a laminated structure, bipolar plates are laminated onto the surface of the membrane-electrode assembly, and oxygen and fuel gas are injected through channels formed in the bipolar plates.

Each of the electrode layers located on opposite sides of the polymer electrolyte membrane includes a catalyst layer containing a catalyst and a fluorine-based binder, and an electrode substrate, and the catalyst layer adheres to the surface of the polymer electrolyte membrane.

The moisture and heat generated during the operation of the fuel cell can easily cause an ion conductor and a porous support constituting the polymer electrolyte membrane to undergo dimensional changes such as expansion or contraction, leading to the problem of delamination of the polymer electrolyte membrane from the catalyst layer.

The delamination from the catalyst layer accelerates the degradation of the fuel cell and significantly deteriorates the performance of the fuel cell. Therefore, ensuring the dimensional stability of the polymer electrolyte membrane is a critical factor that significantly impacts the performance and lifespan of the fuel cell.

Accordingly, there is a need for technology development for a polymer electrolyte membrane that has excellent physical and mechanical properties as well as excellent ion conductivity while exhibiting little dimensional changes in response to heat and moisture generated during the operation of a fuel cell.

[Documents of Related Art]

(Patent Document 1) (0001) Japanese Patent No. 4734279 (2008.11.06)
(Patent Document 2) (0002) Japanese Patent No. 3978668 (2004.08.12)
(Patent Document 3) (0003) Japanese Patent Application Publication No. 2011-145588 (2011.11.24)

**Disclosure**

**Technical Problem**

An objective of the present disclosure is to provide a polymer electrolyte membrane that prevents deformation of the polymer electrolyte membrane due to heat and moisture generated during operation of a fuel cell.
Another objective of the present disclosure is to provide a polymer electrolyte membrane that has excellent electrode adhesion and prevents deterioration of battery performance without causing the problem of the polymer electrolyte membrane being separated from electrodes due to deformation of the polymer electrolyte membrane when a fuel cell is in operation and at rest.
Still objective of the present disclosure is to provide a membrane-electrode assembly including the polymer electrolyte membrane.

**Technical Solution**

According to an aspect of the present disclosure, there is provided a polymer electrolyte membrane including an ion conductor having ion conductivity, in which the polymer electrolyte membrane may have an initial storage modulus in a machine direction (MD) of equal to or greater than 500 MPa, and have a ratio of an initial storage modulus (S) in a direction with a smaller initial storage modulus among a transverse direction (TD) and the machine direction (MD)/an initial storage modulus (L) in a direction with a larger initial storage modulus of 0.5 to 1.0.
According to an embodiment, the polymer electrolyte membrane may include a porous support and an ion conductor filled in pores of the porous support.
According to another embodiment, the porous support may include any one selected from the group consisting of nylon, polyimide, polybenzoxazole, polyethylene terephthalate, polyethylene, polypropylene, polytetrafluoroethylene, polyarylene ether sulfone, polyether ether ketone, a copolymer thereof, and a combination thereof.
According to still another embodiment, the porous support may include a perfluorinated polymer sheet including a plurality of pores formed by a polymer fibril microstructure, or a nanoweb in which nanofibers are integrated into the form of a nonwoven cloth including a plurality of pores.
According to yet another embodiment, the ion conductor may be any one selected from a hydrocarbon-based ion conductor, a fluorine-based ion conductor, an anion conductor, and a mixture thereof.
According to yet another embodiment, the ion conductor may have an equivalent weight (EW) of 500 to 1,100 g/eq.
According to yet another embodiment, the ion conductor may include the hydrocarbon-based ion conductor, and the hydrocarbon-based ion conductor may be any one selected from the group consisting of sulfonated polyimide (S-PI), sulfonated polyarylether sulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and a mixture thereof.
According to yet another embodiment, the ion conductor may include a fluorine-based ion conductor, and the fluorine-based polymer may be poly(perfluorosulfonic acid), poly(perfluorocarboxylic acid), a copolymer of tetrafluoroethylene including a sulfonic acid group and fluoro vinyl ether, defluorinated polyetherketone sulfide, or a mixture thereof.
According to another aspect of the present disclosure, there is provided a membrane-electrode assembly including the above-described polymer electrolyte membrane, the membrane-electrode assembly including an anode electrode and a cathode electrode located opposite each other; and a polymer electrolyte membrane located between the anode electrode and the cathode electrode.

According to still another aspect of the present disclosure, there is provided a fuel cell, including the above-described membrane-electrode assembly.

## Advantageous Effects

A polymer electrolyte membrane according to the present disclosure is suppressed from being deformed due to heat and moisture generated during operation of a fuel cell, and thus has excellent dimensional stability and mechanical durability and also has excellent ionic conductivity.

By using the polymer electrolyte membrane according to the present disclosure, the present disclosure has the effect of maintaining excellent fuel cell performance without causing the problem of the polymer electrolyte membrane being separated from electrodes due to deformation of the polymer electrolyte membrane when a fuel cell is in operation and at rest.

## Description of Drawings

FIG. 1 is a vertical sectional view illustrating a polymer electrolyte membrane according to the present disclosure;
FIG. 2 is a vertical sectional view illustrating a membrane-electrode assembly including the polymer electrolyte membrane according to the present disclosure;
FIG. 3 is a schematic view illustrating the overall configuration of a fuel cell according to an embodiment of the present disclosure.

## Best Mode

Hereinbelow, each configuration of the present disclosure will be described in detail such that the present disclosure can be easily embodied by one of ordinary skill in the art to which this disclosure belongs, but this is merely one example, and the scope of the present disclosure is not limited thereto.

The term "preferred" or "preferably" as used in the present disclosure indicates embodiments of the present disclosure that provide specific advantages under specific conditions. However, other embodiments can also be preferred under the same conditions or under different conditions. Furthermore, it should be noted that description of one or more preferred embodiments is not intended to prove that other embodiments are not useful or to exclude other embodiments within the scope of the present disclosure.

The term "comprising" as used in this specification is used to list materials, compositions, devices, and methods which are useful for the present disclosure and is not intended to limit the scope of the present disclosure to the listed examples.

A polymer electrolyte membrane according to an embodiment of the present disclosure is a polymer electrolyte membrane including an ion conductor having ion conductivity, in which the polymer electrolyte membrane has an initial storage modulus in a machine direction MD of equal to or greater than 500 MPa, and has a ratio of an initial storage modulus S in a direction with a smaller initial storage modulus among a transverse direction TD and the machine direction MD/an initial storage modulus L in a direction with a larger initial storage modulus of 0.5 to 1.0.

Storage modulus refers to the ratio of elastic energy stored in a material, and a higher storage modulus indicates a material is more elastic. Initial storage modulus refers to the storage modulus of a polymer electrolyte membrane before use after manufacture.

MD represents the production direction in roll-to-roll manufacturing, TD represents the direction orthogonal to MD, and when viewed in a plane, MD and TD may represent the X axis and the Y axis, respectively.

When the MD initial storage modulus is less than 500 MPa or the S/L ratio is less than 0.5, the polymer electrolyte exhibits anisotropic characteristics in which there is a difference in the rate of change in dimensions on the X and Y axes. This causes the following problems. During the operation of a fuel cell, pinholes and tears may occur in the electrolyte membrane due to the stress caused by shrinkage/expansion in a humidified/dry environment, leading to delamination of the electrolyte membrane from electrodes and reduced durability. Also, significant dimensional changes in the electrolyte membrane may reduce its adhesive strength with the electrodes, which may accelerates battery degradation in environments with extreme temperature changes or increased battery operation times, resulting in significant deterioration in battery performance. When the S/L ratio exceeds 1.0, there is a problem in that the rigidity of the electrolyte membrane may deteriorate and the physical and mechanical properties may deteriorate.

The polymer electrolyte membrane having the initial storage modulus or S/L ratio as described above may be implemented by stacking a plurality of polymer electrolyte membranes or porous supports of which storage moduli have been measured, or by controlling physical properties such as the equivalent weight (EW) or content of an ion conductor or the thickness of a support.

Meanwhile, the polymer electrolyte membrane according to the present disclosure may be a single membrane or a reinforced composite membrane.

More preferably, the polymer electrolyte membrane may be a reinforced composite membrane including a porous support and an ion conductor filled in pores of the porous support.

The use of the reinforced composite membrane with relatively excellent dimensional stability and physical and mechanical properties has the advantage of preventing deterioration of the cell performance even with a somewhat increased resistance of the polymer electrolyte membrane itself, thereby maintaining excellent performance and lifespan of the fuel cell itself.

More specifically, the polymer electrolyte membrane is a reinforced composite membrane in which the porous support includes a plurality of pores and the ion conductor fills the pores of the porous support.

The porous support may include a perfluorinated polymer sheet including a plurality of pores formed by a polymer fibril microstructure, or a nanoweb in which nanofibers are integrated into the form of a nonwoven cloth including a plurality of pores.

The perfluorinated polymer sheet including the plurality of pores formed by the polymer fibril microstructure may include a plurality of pores formed by a microstructure in which nodes are interconnected via fibrils. In order to include the plurality of pores formed by the microstructure as described above, the perfluorinated polymer sheet may be an elongated perfluorinated polymer sheet.

The perfluorinated polymer may include a highly fluorinated polymer having high resistance to thermal and chemical decomposition, preferably a perfluorinated polymer. For example, the perfluorinated polymer may be a copolymer of polytetrafluoroethylene (PTFE) or tetrafluoroethylene and $CF_2=CFC_nF_{2n+1}$ (n being an integer ranging from 1 to 5) or $CF_2=CFO-(CF_2CF(CF_3)O)_mC_nF_{2n+1}$ (m being an integer ranging from 0 to 15 and n being an integer ranging from 1 to 15).

The PTFE is commercially available, and may be suitably used as the porous support. Additionally, expanded polytetrafluoroethylene (e-PTFE), which has a polymer fibril microstructure or a microstructure in which nodes are interconnected via fibrils, may also be suitably used as the porous support, and a PTFE sheet having a polymer fibril microstructure in which no nodes are present may also be suitably used as the porous support. The e-PTFE sheet may have a porosity of at least 35%, and each of the micropores may have a diameter of about 0.01 to 1 $\mu$m.

Meanwhile, the nanoweb may be a nanoweb in which nanofibers are integrated into the form of a nonwoven cloth including a plurality of pores.

The nanoweb may have a basic weight of 5 g/m$^2$ to 30 g/m$^2$. When the basis weight of the nanoweb is less than 5 g/m$^2$, visible pores may be formed in the nanoweb, making it difficult to realize the function as the porous support, whereas when it exceeds 30 g/m$^2$, the nanoweb may be manufactured in the form of a paper or textile in which pores are hardly formed.

The porosity of the porous support may be equal to or greater than 45%, specifically equal to or greater than 60%. Meanwhile, it is preferable that the porous support has a porosity of equal to or less than 90%. When the porosity of the porous support exceeds 90%, the shape stability of the porous support may deteriorate, making it difficult for subsequent processes to proceed smoothly. The porosity may be calculated using Mathematical Equation 1 below based on the ratio of the volume of air to the total volume of the porous support. At this time, the total volume may be calculated by manufacturing a rectangular sample and measuring the width, length, and thickness of the sample, and the volume of air may be obtained by subtracting the volume of a polymer, back-calculated from the density thereof after measuring the mass of the sample, from the total volume of the porous support.

Porosity (%)=(volume of air in porous support/total volume of porous support)×100          [Mathematical Equation 1]

The polymer electrolyte membrane is a polymer electrolyte membrane in the form of a reinforced composite membrane in which the pores of the porous support are filled with an ion conductor, and may include a first ion conductor layer located on a first surface of the porous support and a second ion conductor layer located on a second surface of the porous support. The first ion conductor layer and the second ion conductor layer may be formed as the result of the surplus ion conductor filling the pores of the porous support forming a thin film on the surface of the porous support.

The porous support is an aggregate of nanofibers in which nanofibers are three-dimensionally irregularly and discontinuously connected, and thus contains a large number of uniformly distributed pores. The porous support composed of a large number of uniformly distributed pores has excellent porosity and characteristics (such as dimensional stability) that can complement the properties of an ion conductor.

The pore diameter, which is the diameter of the pores formed in the porous support, may be 0.05 to 30 $\mu$m. When the pore diameter is less than 0.05 $\mu$m, the ionic conductivity of the polymer electrolyte may deteriorate, whereas when the pore diameter exceeds 30 $\mu$m, the mechanical strength of the polymer electrolyte may deteriorate.

Additionally, the porosity, which indicates the degree to which the porous support has pores, may be 50% to 98%.

When the porosity of the porous support is less than 50%, the ionic conductivity of the polymer electrolyte may deteriorate, whereas when the porosity exceeds 98%, the mechanical strength and dimensional stability of the polymer electrolyte may deteriorate.

The porosity (%) may be calculated using Mathematical Equation 2 below based on the ratio of the volume of air to the total volume of the porous support.

[Mathematical Equation 2]

$$\text{Porosity (\%)} = (\text{volume of air/total volume}) \times 100$$

At this time, the total volume of the porous support may be calculated by manufacturing a rectangular porous support sample and measuring the width, length, and thickness of the sample, and the volume of air in the porous support may be obtained by subtracting the volume of a polymer, back-calculated from the density thereof after measuring the mass of the porous support sample, from the total volume of the porous support.

The porous support is an aggregate of nanofibers in which nanofibers are three-dimensionally irregularly and discontinuously connected, and the nanofibers may have an average diameter of 0.005 to 5 $\mu$m. When the average diameter of the nanofibers is less than 0.005 $\mu$m, the mechanical strength of the porous support may deteriorate, whereas when the average diameter of the nanofibers exceeds 5 $\mu$m, it may not be easy to control the porosity of the porous support.

The nanofibers may be any one selected from the group consisting of nylon, polyimide, polybenzoxazole, polyethylene terephthalate, polyethylene, polypropylene, polytetrafluoroethylene, polyarylene ether sulfone, polyether ether ketone, a copolymer thereof, and a combination thereof, but the present disclosure is not limited thereto.

The porous support may have a thickness of 5 to 30 $\mu$m. When the thickness of the porous support is less than 5 $\mu$m, the mechanical strength and dimensional stability of the polymer electrolyte may deteriorate, whereas when the thickness of the porous support exceeds 30 $\mu$m, the resistance loss of the polymer electrolyte may increase.

The ion conductors may each independently be a cation conductor having a cation exchange group for exchanging a cation such as a proton, or an anion conductor having an anion exchange group for exchanging an anion such as hydroxyl ion, carbonate, or bicarbonate.

The cation exchange group may be any one selected from the group consisting of a sulfonic acid group, a carboxyl group, a boronic acid group, a phosphoric acid group, an imide group, a sulfonimide group, a sulfonamide group, a sulfonic acid fluoride group, and a combination thereof. In general, the cation exchange group may be a sulfonic acid group or a carboxyl group.

The cation conductor may include the cation exchange group, and may be a fluorine-based polymer including fluorine in the main chain thereof; a hydrocarbon-based polymer, such as benzimidazole, polyamide, polyamide imide, polyimide, polyacetal, polyethylene, polypropylene, acrylic resin, polyester, polysulfone, polyether, polyether imide, polyester, polyether sulfone, polyether imide, polycarbonate, polystyrene, polyphenylene sulfide, polyether ether ketone, polyether ketone, polyaryl ether sulfone, polyphosphazene, or polyphenyl quinoxaline; a partially fluorinated polymer, such as a polystyrene-graft-ethylene tetrafluoroethylene copolymer or a polystyrene-graft-polytetrafluoroethylene copolymer; or sulfone imide.

More specifically, in the case in which the cation conductor is a proton conductor, the polymer may include, in its side-chain, a cation exchange group selected from the group consisting of a sulfonic acid group, a carboxyl group, a phosphoric acid group, a phosphonic acid group, and a derivative thereof. Specific examples of the polymer may include, but are not limited to, a fluorine-based polymer including poly(perfluorosulfonic acid), poly(perfluorocarboxylic acid), a copolymer of tetrafluoroethylene including a sulfonic acid group and fluoro vinyl ether, defluorinated polyetherketone sulfide, or a mixture thereof; and a hydrocarbon-based polymer including sulfonated polyimide (S-PI), sulfonated polyarylether sulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and a mixture thereof.

The anion conductor is a polymer capable of transporting an anion, such as hydroxyl ion, carbonate, or bicarbonate. The anion conductor is commercially available in the form of hydroxide or halide (generally chloride), and the anion conductor may be used in an industrial water purification, metal separation, or catalytic process.

As the anion conductor, a polymer doped with metal hydroxide may be generally used. Specifically, poly(ether sulfone), polystyrene, a vinyl-based polymer, poly(vinyl chloride), poly(vinylidene fluoride), poly(tetrafluoroethylene), poly(benzimidazole), or poly(ethylene glycol), doped with metal hydroxide, may be used.

Among the ion conductors, a fluorine-based polymer may be used. The fluorine-based polymer may be, for example, a perfluorosulfonic acid (PFSA)-based polymer or a perfluorocarboxylic acid (PFCA)-based polymer, but is not limited thereto. As the perfluorosulfonic acid-based polymer, Nafion (Dupont) may be used, and as the perfluorocarboxylic acid-based polymer, Flemion (Asahi Glass) may be used.

The ion conductor may have a weight average molecular weight of 240 g/mol to 200,000 g/mol, specifically 240 g/mol to 10,000 g/mol.

In particular, in the present disclosure, the ion conductor may have an equivalent weight (EW) of 500 to 1,100 g/eq. More preferably, the equivalent weight may be -600 to 1,000 g/eq.

When the equivalent weight is less than the above range, the battery performance at low temperatures may deteriorate, whereas when it exceeds the above range, the dimensional stability and durability of the polymer electrolyte membrane may deteriorate.

Hereinafter, the present disclosure will be described in more detail with reference to the drawings.

However, this is merely one example to explain the present disclosure, and the scope of the present disclosure is not limited by the following description.

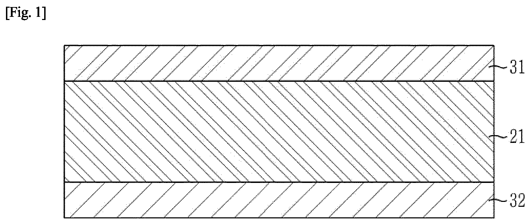

FIG. 1 is a vertical sectional view illustrating a polymer electrolyte membrane according to the present disclosure.

Referring to FIG. 1, as illustrated in vertical section, a polymer electrolyte membrane according to an embodiment of the present disclosure is a reinforced composite membrane including a porous support 21 having a plurality of pores and an ion conductor (not illustrated) impregnated in the pores of the porous support, and may further include ion conductor layers 31 and 32 on a first surface and a second surface of the porous support impregnated with the ion conductor, respectively.

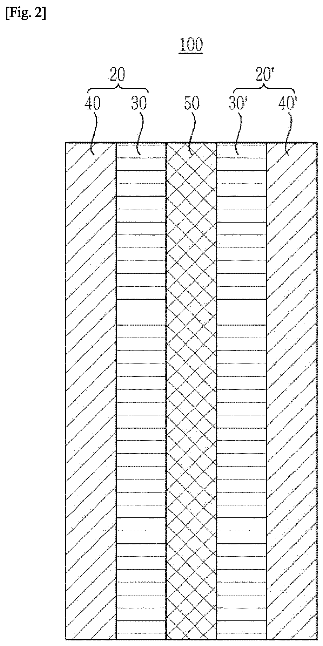

FIG. 2 is a view schematically illustrating a membrane-electrode assembly including the polymer electrolyte membrane according to the present disclosure. Referring to FIG. 2, the membrane-electrode assembly 100 includes the polymer electrolyte membrane 50 and electrodes 20, 20' disposed on opposite surfaces of the polymer electrolyte membrane 50, respectively. The electrode 20, 20' includes an electrode substrate 40, 40' and a catalyst layer 30, 30' formed on a surface of the electrode substrate 40, 40', and may further include a microporous layer (not illustrated) containing conductive fine particles such as carbon powder or carbon black between the electrode substrate 40, 40' and the catalyst layer 30, 30' to facilitate mass diffusion at the electrode substrate 40, 40'.

In the membrane-electrode assembly 100, the electrode 20, which is disposed on a first surface of the polymer electrolyte membrane 50 and causes an oxidation reaction to generate hydrogen ions and electrons from fuel transferred to the catalyst layer 30 through the electrode substrate 40, is referred to as an anode electrode, and the electrode 20', which is disposed on a second surface of the polymer electrolyte membrane 50 and causes a reduction reaction to generate water from the hydrogen ions supplied through the polymer electrolyte membrane 50 and an oxidizing agent transferred to the catalyst layer 30' through the electrode substrate 40', is referred to as a cathode electrode.

As the electrode substrate 40, 40', a porous conductive substrate may be used to ensure smooth supply of hydrogen or oxygen. Representative examples thereof include, but are not limited to, carbon paper, carbon cloth, carbon felt, or metal cloth (a porous film made of fibrous metal cloth or a metal film formed on a surface of cloth made of polymer fibers). Additionally, it is preferable that the electrode substrate 40, 40' is water-repellent treated with a fluorine-based resin to prevent reactant diffusion efficiency from being reduced by water generated during the operation of the fuel cell. As the fluorine-based resin, polytetrafluoroethylene, polyvinylidene fluoride, polyhexafluoropropylene, polyperfluoroalkyl vinyl ether, polyperfluorosulfonylfluoride alkoxy vinyl ether, fluorinated ethylene propylene, polychlorotrifluoroethylene, or a copolymer thereof may be used.

A fuel cell according to an embodiment of the present disclosure may be, for example, a fuel cell that includes the membrane-electrode assembly and uses hydrogen gas as fuel.

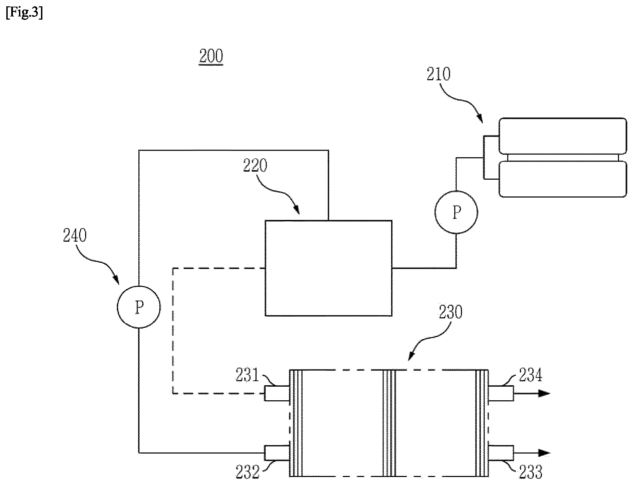

FIG. 3 is a schematic view illustrating the overall configuration of the fuel cell.

Referring to FIG. 3, the fuel cell 200 includes a fuel supply unit 210 that supplies a mixed fuel in which fuel and water are mixed, a reforming unit 220 that reforms the mixed fuel to generate a reformed gas containing hydrogen gas, a stack 230 that generates electrical energy by causing an electrochemical reaction between the hydrogen gas-containing reformed gas supplied from the reforming unit 220 and an oxidizing agent, and an oxidizing agent supply unit 240 that supplies the oxidizing agent to the reforming unit 220 and the stack 230.

The stack 230 includes a plurality of unit cells that generate electrical energy by inducing an oxidation/reduction reaction between the hydrogen gas-containing reformed gas supplied from the reforming unit 220 and the oxidizing agent supplied from the oxidizing agent supply unit 240.

Each of the unit cells refers to a unit cell that generates electricity, and includes the membrane-electrode assembly that oxidizes/reduces the hydrogen gas-containing reformed gas and oxygen in the oxidizing agent, and separators (also referred to as bipolar plates, hereinafter referred to as "separators") that supply the hydrogen gas-containing reformed gas and the oxidizing agent to the membrane-electrode assembly. The separators are disposed on opposite sides of the membrane-electrode assembly. At this time, the separators located at the outermost sides of the stack may be particularly referred to as end plates.

Among the separators, one of the end plates is provided with a pipe-shaped first supply tube 231 for injecting the hydrogen gas-containing reformed gas supplied from the reforming unit 220, and a pipe-shaped second supply tube 232 for injecting oxygen gas, and the remaining end plate is provided with a first discharge tube 233 for discharging the hydrogen gas-containing reformed gas that finally remains unreacted in the plurality of unit cells to the outside, and a second discharge tube 234 for discharging the oxidizing agent that finally remains unreacted in the unit cells to the outside.

Hereinafter, the present disclosure will be described in more detail with respect to Examples thereof. However, this is merely an exemplary description for understanding the present disclosure, and the scope of the present disclosure is not limited or restricted to the following Examples.

**(Example 1)**

A first ionomer dispersion containing 20 wt% of a highly fluorinated polymer having an equivalent weight (EW) of 600 g/eq was prepared. Two sheets of porous sub-support (e-PTFE, pore size: 0.10 to 0.2 $\mu$m, thickness: 3 $\mu$m, MD/TD tensile elongation ratio: 0.4) were laminated orthogonally in the MD and the TD, and then wetted with ionomer dispersion. The resulting product was dried in a convection oven at 80°C for 4 hours, cooled, and heat-treated at 190°C for 20 minutes. Thus, a reinforced composite membrane having a thickness of 20 $\mu$m, an MD initial storage modulus of 1,000 MPa, and an initial storage modulus ratio (S/L) of 0.7 was obtained.

**(Example 2)**

A first ionomer dispersion containing 15 wt% of a highly fluorinated polymer having an equivalent weight (EW) of 700 g/eq was prepared. One sheet of porous sub-support (e-PTFE, pore size: 0.10 to 0.2 $\mu$m, thickness: 6 $\mu$m, MD/TD tensile elongation ratio: 0.3 to 0.5) and two sheets of porous sub-support (e-PTFE, pore size: 0.10 to 0.2 $\mu$m, thickness: 6 $\mu$m, MD/TD tensile elongation ratio: 0.2 to 0.4), which had different tensile elongations, were laminated in the same direction, and then wetted with the ionomer dispersion. The resulting product was dried in a convection oven at 80°C for 4 hours, cooled, and heat-treated at 160°C for 20 minutes. Thus, a reinforced composite membrane having a thickness of 20 $\mu$m, an MD initial storage modulus of 550 MPa, and an initial storage modulus ratio (S/L) of 0.5 was obtained.

**(Comparative Example 1)**

A first ionomer dispersion containing 15 wt% of a highly fluorinated polymer having an equivalent weight (EW) of 700 g/eq was prepared. A porous sub-support (e-PTFE, pore size: 0.10 to 0.2 $\mu$m, thickness: 3 $\mu$m, MD/TD tensile elongation ratio: 0.3 to 0.5) was wetted with the ionomer dispersion. The resulting product was dried in a convection oven at 80°C for 4 hours and heat-treated at 140°C for 20 minutes. Thus, a reinforced composite membrane having a thickness of 20 $\mu$m, an MD initial storage modulus of 392 MPa, and an initial storage modulus ratio (S/L) of 0.4 was obtained.

[Measurement Method]

1) Measurement of initial storage modulus

The initial storage modulus was measured using Q800 from TA-Instruments under the following conditions: room temperature, frequency = 1 Hz, strain = 0.1%, preload force = 0.25 N, and isothermal = 3 min.

2) Dimensional stability evaluation

The MD/TD directions of a sample cut to a size of 10 cm*10 cm were marked with a blue name pen. A 500 ml beaker was filled with 300 ml of distilled water, heated on a hot plate at room temperature and humidity (23°C, R50%), and boiled. When the temperature reached 100°C, the sample was placed in the beaker and immersed for 10 minutes, after which the sample was taken out and dehydrated. The changes in the length and width of the sample were measured using graph paper and a ruler, and the changes in the length before and after immersion were recorded. The dimensional change rate was calculated using the equation below. The dimensional change of the reinforced composite membrane was calculated based on the average of the MD/TD values.

$$* \text{ Dimensional change rate} \atop (\%, \text{MD/TD}) = \frac{\text{length after immersion(mm)} - \text{length before immersion(mm)}}{\text{length before immersion(mm)}} \times 100$$

3) Measurement of ionic conductivity

The ionic conductivity was measured as in-plane conductivity by a four-probe DC method, using Model 740 MTS from Scibner Associates. A sample with a size of 1 cm*3 cm was prepared, and the ionic conductivity measurement was performed under the following conditions: temperature = 80°C and humidity = 50% RH.

4) Wet/dry cycling evaluation (mechanical durability evaluation)

As an accelerated durability test method for measuring the mechanical durability of a polymer electrolyte membrane of a fuel cell, a standard evaluation method (NEDO protocol, Humidity Cycle Test Method) developed by NEDO (Japan) was used. The evaluation conditions were as follows: battery temperature: 80°C, wet cycle: Tda = Tdc = 90°C (RH 150%), 2 min, and dry cycle: Tda = Tdc = Dry (RH 0%), 2 min. The test was terminated when either of two events occurred first: the hydrogen leakage amount exceeded 10 times the initial amount or 20,000 cycles were completed.

Membrane-electrode assemblies were manufactured using polymer electrolyte membranes of Examples and Comparative Examples above. The battery performance, dimensional stability, and peel strength between electrodes and a polymer electrolyte membrane were measured, and the results are illustrated in Table 1 below.

[Table 1]

| | MD Initial storage modulus | Storage modulus ratio (S/L) | Ion conductivity | Dimensional change | Wet/dry cycling test |
|---|---|---|---|---|---|
| Example 1 | 1,000 MPa | 0.7 | 0.043 | 1% | 50000 cycle↑(above) |
| Example 2 | 532 MPa | 0.5 | 0.043 | 3% | **40000** cycle ↓ |
| Comparative Example 1 | 392 MPa | 0.4 | 0.045 | 6% | 20000 cycle ↑ |

Referring to Table 1 above, it can be seen that the polymer electrolyte membrane of Example 1 according to the present disclosure, which satisfied the MD initial storage modulus and the S/L initial storage modulus ratio, exhibited little dimensional change and excellent durability.

**Claims**

1. A polymer electrolyte membrane comprising an ion conductor having ion conductivity,
   wherein the polymer electrolyte membrane has an initial storage modulus in a machine direction (MD) of equal to or greater than 500 MPa, and has a ratio of an initial storage modulus (S) in a direction with a smaller initial storage modulus among a transverse direction (TD) and the machine direction (MD)/an initial storage modulus (L) in a direction with a larger initial storage modulus of 0.5 to 1.0.

2. The polymer electrolyte membrane of claim 1, wherein the polymer electrolyte membrane includes a porous support and an ion conductor filled in pores of the porous support.

3. The polymer electrolyte membrane of claim 2, wherein the porous support includes any one selected from the group consisting of nylon, polyimide, polybenzoxazole, polyethylene terephthalate, polyethylene, polypropylene, polytetrafluoroethylene, polyarylene ether sulfone, polyether ether ketone, a copolymer thereof, and a combination thereof.

4. The polymer electrolyte membrane of claim 2, wherein the porous support includes a perfluorinated polymer sheet including a plurality of pores formed by a polymer fibril microstructure, or a nanoweb in which nanofibers are integrated into the form of a nonwoven cloth including a plurality of pores.

5. The polymer electrolyte membrane of claim 2, wherein the ion conductor is any one selected from a hydrocarbon-based ion conductor, a fluorine-based ion conductor, an anion conductor, and a mixture thereof.

6. The polymer electrolyte membrane of claim 5, wherein the ion conductor has an equivalent weight (EW) of 500 to 1,100 g/eq.

7. The polymer electrolyte membrane of claim 5, wherein the ion conductor includes the hydrocarbon-based ion conductor, and

the hydrocarbon-based ion conductor is any one selected from the group consisting of sulfonated polyimide (S-PI), sulfonated polyarylether sulfone (S-PAES), sulfonated polyetheretherketone (SPEEK), sulfonated polybenzimidazole (SPBI), sulfonated polysulfone (S-PSU), sulfonated polystyrene (S-PS), sulfonated polyphosphazene, sulfonated polyquinoxaline, sulfonated polyketone, sulfonated polyphenylene oxide, sulfonated polyether sulfone, sulfonated polyether ketone, sulfonated polyphenylene sulfone, sulfonated polyphenylene sulfide, sulfonated polyphenylene sulfide sulfone, sulfonated polyphenylene sulfide sulfone nitrile, sulfonated polyarylene ether, sulfonated polyarylene ether nitrile, sulfonated polyarylene ether ether nitrile, sulfonated polyarylene ether sulfone ketone, and a mixture thereof.

8. The polymer electrolyte membrane of claim 1, wherein the ion conductor includes a fluorine-based ion conductor, and the fluorine-based polymer is poly(perfluorosulfonic acid), poly(perfluorocarboxylic acid), a copolymer of tetrafluoroethylene including a sulfonic acid group and fluoro vinyl ether, defluorinated polyetherketone sulfide, or a mixture thereof.

9. A membrane-electrode assembly comprising the polymer electrolyte membrane of claim 1, the membrane-electrode assembly comprising:

an anode electrode and a cathode electrode located opposite each other; and
a polymer electrolyte membrane located between the anode electrode and the cathode electrode.

10. A fuel cell comprising the membrane-electrode assembly of claim 9.

[Fig. 1]

[Fig. 2]

[Fig.3]

## INTERNATIONAL SEARCH REPORT

| | International application No. |
|---|---|
| | **PCT/KR2023/008763** |

| A. | CLASSIFICATION OF SUBJECT MATTER |
|---|---|

**H01M 8/1067**(2016.01)i; **H01M 8/1018**(2016.01)i; **H01M 8/1058**(2016.01)i; **H01M 8/1039**(2016.01)i; **H01M 8/1004**(2016.01)i; **H01M 8/10**(2006.01)i

According to International Patent Classification (IPC) or to both national classification and IPC

| B. | FIELDS SEARCHED |
|---|---|

Minimum documentation searched (classification system followed by classification symbols)

H01M 8/1067(2016.01); B01D 53/22(2006.01); H01M 8/02(2006.01); H01M 8/10(2006.01); H01M 8/1004(2016.01); H01M 8/1018(2016.01); H01M 8/1053(2016.01); H01M 8/1062(2016.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고분자 전해질막(polymer electrolyte membrane), 막-전극 어셈블리(membrane electrode assembly), 초기 저장 탄성률(initial storage modulus), 이온 전도체(ionic conductor), 다공성 지지체(porous support)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | KR 10-2008400 B1 (KOLON MATERIAL. INC.) 08 August 2019 (2019-08-08)<br>See paragraphs [0034], [0047] and [0075]-[0076]; and claim 1. | 1-10 |
| A | US 7910236 B2 (HOMMURA, S. et al.) 22 March 2011 (2011-03-22)<br>See entire document. | 1-10 |
| A | KR 10-2015-0135116 A (DANKOOK UNIVERSITY CHEONAN CAMPUS INDUSTRY ACADEMIC COOPERATION FOUNDATION) 02 December 2015 (2015-12-02)<br>See entire document. | 1-10 |
| A | KR 10-2006-0123771 A (MATSUSHITA ELECTRIC INDUSTRIAL CO., LTD.) 04 December 2006 (2006-12-04)<br>See entire document. | 1-10 |
| A | KR 10-2021-0007563 A (SANG-A FRONTEC CO., LTD.) 20 January 2021 (2021-01-20)<br>See entire document. | 1-10 |

| ☐ Further documents are listed in the continuation of Box C. | ☑ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 October 2023** | **12 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2023/008763**

| Patent document cited in search report | | | Publication date (day/month/year) | Patent family member(s) | | | Publication date (day/month/year) |
|---|---|---|---|---|---|---|---|
| KR | 10-2008400 | B1 | 08 August 2019 | None | | | |
| US | 7910236 | B2 | 22 March 2011 | CN | 101048434 | A | 03 October 2007 |
| | | | | CN | 101048434 | B | 13 April 2011 |
| | | | | EP | 1806371 | A1 | 11 July 2007 |
| | | | | EP | 1806371 | A4 | 02 July 2008 |
| | | | | EP | 1806371 | B1 | 07 September 2011 |
| | | | | JP | 2008-046620 | A1 | 22 May 2008 |
| | | | | JP | 5261937 | B2 | 14 August 2013 |
| | | | | KR | 10-2007-0072530 | A | 04 July 2007 |
| | | | | US | 2007-0202377 | A1 | 30 August 2007 |
| | | | | WO | 2006-046620 | A1 | 04 May 2006 |
| KR | 10-2015-0135116 | A | 02 December 2015 | None | | | |
| KR | 10-2006-0123771 | A | 04 December 2006 | CN | 100573989 | C | 23 December 2009 |
| | | | | CN | 100926705 | A | 07 March 2007 |
| | | | | DE | 602005023287 | D1 | 14 October 2010 |
| | | | | EP | 1732155 | A1 | 13 December 2006 |
| | | | | EP | 1732155 | A4 | 10 March 2010 |
| | | | | EP | 1732155 | B1 | 01 September 2010 |
| | | | | JP | 2005-285757 | A | 13 October 2005 |
| | | | | JP | 4907882 | B2 | 04 April 2012 |
| | | | | KR | 10-0750457 | B1 | 22 August 2007 |
| | | | | US | 2005-0227132 | A1 | 13 October 2005 |
| | | | | US | 7622215 | B2 | 24 November 2009 |
| | | | | WO | 2005-086264 | A1 | 15 September 2005 |
| KR | 10-2021-0007563 | A | 20 January 2021 | KR | 10-2212933 | B1 | 05 February 2021 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4734279 B
- JP 20081106 B
- JP 3978668 B
- JP 20040812 B
- JP 2011145588 A
- JP 20111124 A